# EUROPÄISCHE PATENTANMELDUNG

(11) **EP 2 840 344 A1**
(43) Veröffentlichungstag der Anmeldung: **25.02.2015**
(21) Anmeldenummer: 13180872.7
(22) Anmeldetag: 19.08.2013
(51) Int. Cl.: F28D 20/00

(54) **Druckloser Wärmespeicher für Wassertemperaturen über 100°C**

(71) Anmelder: Siemens Aktiengesellschaft, 80333 München (DE)
(72) Erfinder: Schöttler, Michael, 91052 Erlangen (DE); Grobstich, Andre, 08237 Steinberg (DE)

(57) **Zusammenfassung**

Die Erfindung betrifft einen Wärmespeicher (1) zum Speichern und Bereitstellen von bei der Stromerzeugung anfallender Wärmeenergie mittels eines Fluids, mit mindestens einer ersten (2) und einer zweiten Kammer (3), wobei die erste (2) über der zweiten Kammer (3) angeordnet ist und eine im Wesentlichen in den Kammern (2, 3) angeordnete Leitung (4) einen oberen Bereich (5) der ersten Kammer (2) mit einem unteren Bereich (7) der zweiten Kammer (3) verbindet. Die Erfindung betrifft ferner eine Anlage zur Kraft-Wärme-Kopplung, sowie ein Verfahren zum Speichern und Bereitstellen von bei der Stromerzeugung anfallender Wärmeenergie.

## Beschreibung

Die Erfindung betrifft einen Wärmespeicher, insbesondere einen Wärmespeicher zum Speichern und Bereitstellen von bei der Stromerzeugung anfallender Wärmeenergie mittels eines Fluides, und bezieht sich auf die drucklose Speicherung für Temperaturen über 100°C. Die Erfindung betrifft ferner eine Anlage zur Kraft-Wärme-Kopplung sowie ein Verfahren zum Speichern und Bereitstellen von bei der Stromerzeugung anfallender Wärmeenergie mittels eines Fluides.

Durch die stark fluktuierende Einspeisung von regenerativer Energie (Sonne/Wind) in die Stromnetze ergibt sich für die KWK-Kraftwerke (KWK = Kraft-Wärme-Kopplung) das Dilemma, dass sie einerseits entsprechend der Fernwärmeanforderungen thermische Energie und anderseits entsprechend der Netzanforderungen elektrische Energie liefern sollen, wobei es dann z.B. nachts oder am Wochenende unwirtschaftlich werden kann, fossile Brennstoffe zu verfeuern, um Fernwärme zu erzeugen, da der Strompreis dann oft sehr niedrig ist (in Zukunft evtl. sogar immer häufiger negativ). Um die Produktion von thermischer und elektrischer Energie zu entkoppeln, werden daher vermehrt Fernwärmespeicher eingesetzt, vorzugsweise als drucklose Heißwasserschichtenspeicher. Da drucklose Schichtenspeicher nur mit Wassertemperaturen <100°C (betrieblich wird meist auf <95°C begrenzt) beladen werden können und da zwischen Speicher und Fernwärmenetz oft noch Wärmetauscher mit zusätzlicher Grädigkeit zwischengeschaltet sind (da das Fernwärmenetz oft einen wesentlich höheren Betriebsdruck hat als der Pufferspeicher) sinkt die tatsächlich nutzbare Temperatur im Entlade-Modus zum Teil auf unter 85°C. In der Übergangszeit (Frühjahr/Herbst) und vor allem im Winter werden aber die üblichen Fernwärmenetze mit Vorlauftemperaturen deutlich über 95°C (bis zu ca. 135/140°C) betrieben: außer im Sommer bei Fernwärmevorlauftemperaturen kleiner 85-95°C ist es daher mit dem derzeit üblichen Konzept nicht möglich, das Fernwärmenetz nur aus dem Wärmespeicher alleine zu bedienen und das KWK-Kraftwerk bzw. den gefeuerten oder elektrischen Zusatzkessel komplett abzuschalten.

Um Heißwasserschichtenspeicher mit höheren Fernwärmevorlauftemperaturen über 95°C beladen zu können, werden zum Teil Druckbehälter eingesetzt, die aufgrund der druckabhängigen Sättigungstemperaturen mit entsprechend höheren Vorlauftemperaturen beladen und entladen werden können. Der große Nachteil der Druckbehälter ist jedoch ein wesentlich höherer Prüfaufwand bei der Herstellung, sowie wiederkehrende Prüfungen (z.B. Druckprobe mit kaltem Wasser nach 10 Jahren, wiederkehrende Sichtprüfung aller Schweißnähe: dazu müsste die gesamte Isolierung der Tanks entfernt werden). Zusätzlich steigen die Versicherungsprämien für Druckbehälter abhängig vom Druck und vom Volumen extrem an (da das Risiko von den Versicherern als sehr hoch eingeschätzt wird) und damit werden Druckbehälter für große Speichervolumina aus Kostengründen derzeit sehr selten eingesetzt.

Aufgabe der Erfindung ist es, einen Wärmespeicher der eingangs genannten Art bereitzustellen, der eine einfache und kostengünstige Speicherung von Wasser über 100°C ermöglicht. Eine weitere Aufgabe der Erfindung ist die Angabe einer entsprechenden Anlage zur Kraft-Wärme-Kopplung. Ferner ist es eine Aufgabe der Erfindung, ein Verfahren zum Speichern und Bereitstellen von bei der Stromerzeugung anfallender Wärmeenergie mittels eines Fluides anzugeben.

Die Erfindung löst die auf einen Wärmespeicher gerichtete Aufgabe, indem sie bei einem derartigen Wärmespeicher zum Speichern und Bereitstellen von bei der Stromerzeugung anfallender Wärmeenergie mittels eines Fluids mindestens eine erste und eine zweite Kammer vorsieht, wobei die erste über der zweiten Kammer angeordnet ist und eine im Wesentlichen in den Kammern angeordnete Leitung einen oberen Bereich der ersten Kammer mit einem unteren Bereich der zweiten Kammer verbindet.

Die Erfindung nutzt die Tatsache, dass atmosphärisch offene Tanks (egal welche Höhe) nicht als Druckbehälter, sondern als Gebäude bzw. Betriebsmittel gelten, unabhängig vom statischen Druck und von der Betriebstemperatur, da Druck als auf den atmosphärischen Druck bezogenen Überdruck definiert wird. Durch die Ausführung des Wärmespeichers als offenes Bauteil kann sich kein zusätzlicher Überdruck ausbilden.

Die Erfindung sieht daher die Anordnung mehrerer Schichtenspeicher übereinander in sog. Kammern vor, wodurch verhindert wird, dass über 100°C heißes Wasser in die oberen Bereiche des Tanks gelangen kann. Damit der Tank weiterhin als druckloser atmosphärisch offener Tank gilt, müssen alle Kammern durch innen-liegende Verbindungsleitungen verbunden werden (bei außen-liegenden Verbindungsleitungen würden die Kammern als einzelne Druckbehälter angesehen, die über Rohrleitungen mit Druck beaufschlagt werden können). Um zu verhindern, dass es über diese Verbindungsleitungen zu thermischen Ausgleichsströmungen kommt (da die Dichte des heißen Wassers geringer ist als von kaltem Wasser), werden immer der obere Bereich einer jeden Kammer mit dem unteren Bereich der darunterliegenden Kammer verbunden: zwischen den Endpunkten der Verbindungsleitungen gibt es im Betrieb keine Temperaturdifferenzen und damit auch keine Auftriebskräfte (und damit keine thermische Zirkulation, welche die Schichtung zerstören könnte).

Durch die Höhe des Wärmespeichers kann auch der Druck im unteren Teil des Wärmespeichers festgelegt werden. Die Anzahl und die Höhe der einzelnen Kammern wird vorzugsweise so gewählt, dass einerseits eine Beladung mit maximaler Vorlauf-temperatur möglich ist (z.B. sollte die Einbauhöhe des untersten Zwischenbodens, also des Bodens zwischen der untersten und der darüber liegenden Kammer, so gewählt werden, dass im oberen Teil der untersten Kammer immer "statischer Druck" > "Sättigungsdruck der maximalen Vorlauf-Temperatur" gegeben ist) und anderseits eine maximale Beladung bei minimalen Kosten erreicht wird (d.h. relativ viele Zwischenböden oberhalb der untersten "großen" Kammer, damit die maximale Beladetemperatur im oberen Teil einer jeden weiteren Kammer aufgrund des relativ hohen statischen Druckes möglichst hoch ist).

Bei hohen Wärmespeichern kann der statische Druck im unteren Teil des Wärmespeichers sehr hohe Werte erreichen, die eine "drucklose" Speicherung von Fernwärme-Heißwasser bis über 135°C zulassen.

Durch die Höhe des Wärmespeichers bzw. der Kammern wird der Betriebsdruck im heißen Teil festgelegt (welcher meist mit dem heißen Fernwärmevorlauf verbunden ist). Dieser Betriebsdruck im heißen Teil des Wärmespeichers wird so gewählt, dass er oberhalb des Sättigungsdruckes entsprechend der maximal möglichen Fernwärmevorlauftemperatur (z.B. im Winter) zu liegen kommt.

In einer vorteilhaften Ausführungsform ist ein unterer Bereich der ersten Kammer über eine absperrbare Leitung, in der eine Pumpe angeordnet ist, mit einem unteren Bereich mindestens einer darunterliegenden Kammer verbunden. Hierdurch wird die Möglichkeit einer Belade-Begrenzung geschaffen. Wenn die unterste Kammer komplett gefüllt ist, würde das z.B. 135°C warme Wasser bei weiterer Beladung über die Ausgleichsleitung in den oberen Teil der zweit-untersten Kammer strömen und aufgrund des geringeren statischen Druckes dort Dampfblasen bilden, was aber verhindert werden soll. Daher wird bei Erreichen der zulässigen maximalen Temperatur im unteren Teil einer jeden Kammer aus dem untersten Teil der obersten Kammer relativ kaltes Rücklaufwasser gepumpt/zugemischt, und damit die jeweilige maximal zulässige Kammertemperatur (entsprechend statischem Kammerdruck) geregelt. Sobald auch die oberste Kammer (im unteren Bereich, wo der Rücklauf einbindet) die maximal zulässige Temperatur erreicht hat, ist eine weitere Beladung nicht mehr möglich.

Damit die Wärmeübertragung vom heißen auf das kalte Medium möglichst gering ist, ist es vorteilhaft, wenn die Leitung, d.h. die Ausgleichsleitung zwischen zwei Kammern, thermisch isoliert ist.

Aus demselben Grund ist es vorteilhaft, wenn je zwei benachbarte Kammern durch einen isolierten Zwischenboden voneinander getrennt sind.

Um eine Beschädigung der Tankzwischenböden beim Füllen eines leeren Tanks zu vermeiden, ist es vorteilhaft, wenn zwischen je zwei benachbarten Kammern mindestens ein Druckausgleichsventil angeordnet ist, das bei entsprechender Druckdifferenz öffnet. Damit kann beim Befüllen des Tanks von unten über die unterste Kammer die Luft in die jeweils obere Kammer entweichen. Beim Befüllen des Tanks von oben über die oberste Kammer wird das Wasser durch diese Druckausgleichsventile in die jeweils untere Kammer strömen. Geringe Druckdifferenzen an den Zwischenböden sind im Betrieb aufgrund der unterschiedlichen Dichte des Wassers in den einzelnen Kammern und in den parallel geschalteten Ausgleichsleitungen unvermeidlich.

Vorzugsweise ist an einem Hochpunkt einer Kammer, die unter einer obersten Kammer angeordnet ist, ein Entlüftungsventil vorgesehen, welches über eine Leitung mit der obersten Kammer verbunden ist. Dieses Entlüftungsventil kann entweder ein automatisches Entlüftungsventil sein und kann z.B. mechanisch arbeiten (z.B. als Schwimmerventil) oder es kann z.B. ein Motorventil sein, welches über Füllstandsmessungen in der entsprechenden Kammer angesteuert wird. Diese Entlüftungsventile entfernen eventuell anfallende Luft (z.B. auch bei der Erstbefüllung) und auch anfallenden Dampf (z.B. bei Beladung einer Kammer mit zu hoher Temperatur).

Wie bei den bisher üblichen drucklosen Pufferspeichern bereits üblich und gebräuchlich, kann auch der Wärmespeicher nach der Erfindung als oben geschlossener Tank ausgeführt werden. Es ist daher zweckmäßig, wenn die oberste Kammer als oben geschlossener Tank ausgeführt ist und eine Dampf- oder Inertgas-Zufuhr vorgesehen ist. Diese Kammer kann dann mit Inertgas (z.B. Stickstoff N₂) oder Polsterdampf bei einem Betriebsdruck <0,5 bar beaufschlagt werden, um eine unerwünschte Anreicherung des Wasserinhalts mit Luftsauerstoff (O₂)oder Kohlendioxid (CO₂) zu verhindern und um den Betriebsdruck und damit die maximale Beladetemperatur weiter zu steigern. Gemäß Druckgeräterichtlinie 97/23/EG gelten geschlossene Behälter, welche nur mit einem Überdruck von bis max. 0,5 bar betrieben werden können (d.h. Druckabsicherung z.B. mittels Sicherheitsventil ist erforderlich), nicht als Druckbehälter und unterliegen damit nicht der Druckgeräterichtlinie.

Zur optimalen Be- und Entladung des Wärmespeichers und entsprechend der Wärmeverteilung im Wärmespeicher ist es zweckmäßig, wenn die erste Kammer einen in einem unteren Bereich angeordneten Anschluss an einen Fernwärmerücklauf und eine unterste Kammer einen in einem oberen Bereich angeordneten Anschluss an einen Fernwärmevorlauf aufweist.

Es ist vorteilhaft, wenn über der ersten Kammer eine Zusatzkammer angeordnet ist, welche über eine Leitung mit der untersten Kammer verbunden ist, wobei die Leitung in einen unteren Bereich der untersten Kammer mündet. Das heißt, wenn der mit dem Fernwärmerücklauf verbundene Teil des Speichers mit einem Deckel versehen wird und oberhalb dieses Deckels eine geringe Kaltwasservorlage gehalten wird, entsteht eine weitere Kammer, welche über eine Kaltwassersäule mit dem untersten Teil der untersten Kammer verbunden wird. Dadurch kann - unter Ausnutzung der verschiedenen spezifischen Gewichte der Kaltwassersäule und des Warmwassers in den einzelnen Kammern - der Druck in der mit dem Fernwärmerücklauf verbundenen Kammer geringfügig über den Umgebungsdruck angehoben werden (je nach Temperaturunterschied ergibt sich ein variabler Überdruck gegenüber Umgebung) und diese Kammer lässt sich mit Fernwärme-Wasser über 100°C beladen, was die Gesamtladekapazität des Wärmespeichers weiter erhöht.

Weiterhin ist es vorteilhaft, wenn das Fluid im Wärmespeicher für die Verwendung in einem Fernheiznetz geeignet ist. Dabei ist es besonders zweckmäßig, wenn das Fluid konditioniertes Deionat ist.

Damit ist erstens kein zusätzlicher Wärmetauscher erforderlich, um die Wärme zwischen Wärmespeicher und Fernwärmenetz zu übertragen. Es werden also Komponenten eingespart. Zweitens entfällt der Exergie-Verlust durch die Grädigkeit am Wärmetauscher beim Laden und Entladen des Wärmespeichers. Drittens vergrößert sich die nutzbare Wärmekapazität des Wärmespeichers (der Wärmespeicher kann bis zu einer Fernwärmevorlauftemperatur beladen werden) und viertens kann das Fernwärmenetz immer aus dem Wärmespeicher mit der vorher eingespeicherten Vorlauftemperatur versorgt werden - ohne Nachheizung (mit Wärmetauscher ergibt sich sowohl beim Beladen als auch beim Entladen eine Grädigkeit und die Entladetemperatur ist damit immer um die doppelte Grädigkeit niedriger als die gewünschte Vorlauftemperatur).

Die auf eine Anlage zur Kraft-Wärme-Kopplung gerichtete Aufgabe der Erfindung wird gelöst durch eine Anlage zur Kraft-Wärme-Kopplung, umfassend einen Stromerzeuger und einen Wärmespeicher wie oben beschrieben.

Dabei ist es vorteilhaft, wenn durch eine Verbindungsleitung zwischen Wärmespeicher und Fernwärmenetz der Betriebsdruck gehalten wird. Die Höhe des Wärmespeichers bestimmt durch den geodätischen Wasserdruck den Betriebsdruck im Fernwärmenetz. Ein separates Fernwärmenetz-Nachspeise-und-Druckhalte-System kann damit entfallen.

Im erfinderischen Verfahren zum Speichern und Bereitstellen von bei der Stromerzeugung anfallender Wärmeenergie mittels eines Fluids, wobei ein Betriebsdruck in einem heißesten Teil eines Speichers oberhalb eines Sättigungsdrucks des Fluids entsprechend einer maximal möglichen Fernwärme-Vorlauf-temperatur zu liegen kommt, wird das Fluid in übereinanderliegenden, miteinander verbundenen Kammern gespeichert, wobei der heißeste Teil in der untersten Kammer gespeichert wird, wobei der Druck für den heißesten Teil in der untersten Kammer durch darüber liegendes kälteres Fluid erzeugt wird.

Beim Wärmespeicher nach der Erfindung kann überschüssige Fernwärme mit den üblichen Vorlauftemperaturen von bis zu ca. 135°C (und höher, je nach Wärmespeicherhöhe und Ausführung) eingespeichert und bei Bedarf wieder entnommen und ohne weitere Nachheizung in das Fernwärmenetz zurückgespeist werden. Damit kann in Zeiten niedriger Netzentgelte das KWK-Kraftwerk komplett abgeschaltet und das Fernwärmenetz aus dem Wärmespeicher mit der erforderlichen Vorlauftemperatur bedient werden.

Der Tank des Wärmespeichers kann als druckloser, atmosphärisch offener Tank ausgeführt werden und unterliegt damit nicht der Druckgeräte-Richtlinie. Es sind keine wiederkehrenden Druck- und Sichtprüfungen erforderlich. Die Versicherungsprämien sind gegenüber einem Druckbehälter deutlich niedriger.

Die erforderlichen Speichertank-Volumina können drastisch reduziert werden, da der Wärmespeicher nicht wie bei drucklosen Tanks bisher üblich zwischen ca. 60°C Rücklauftemperatur und maximal 95°C (d.h. mit einem Temperaturunterschied von etwa 35K) beladen und entladen werden können, sondern mit einem Temperaturunterschied von bis zu 75K (z. B. von 60°C bis 135°C). Der Wärmespeicher nach der Erfindung wird natürlich nur in der untersten Kammer mit der maximalen Fernwärmetemperatur beladen werden, da die weiter oben liegenden Kammern etwas niedrigere Drücke aufweisen.

Die Erfindung wird beispielhaft anhand der Zeichnungen näher erläutert. Es zeigen schematisch und nicht maßstäblich:
- Figur 1: einen Wärmespeicher als drucklosen, offenen Behälter nach der Erfindung,
- Figur 2: einen Wärmespeicher nach der Erfindung mit Überladesicherung,
- Figur 3: einen Wärmespeicher nach der Erfindung mit Über-druckabsicherung,
- Figur 4: einen Wärmespeicher nach der Erfindung mit Kammer-entlüftung,
- Figur 5: einen Wärmespeicher nach der Erfindung mit Polster-dampf und
- Figur 6: einen Wärmespeicher nach der Erfindung mit Zusatz-kammer und Kaltwasserzirkulation zur Erhöhung des statischen Drucks in den darunter liegenden Kammern.

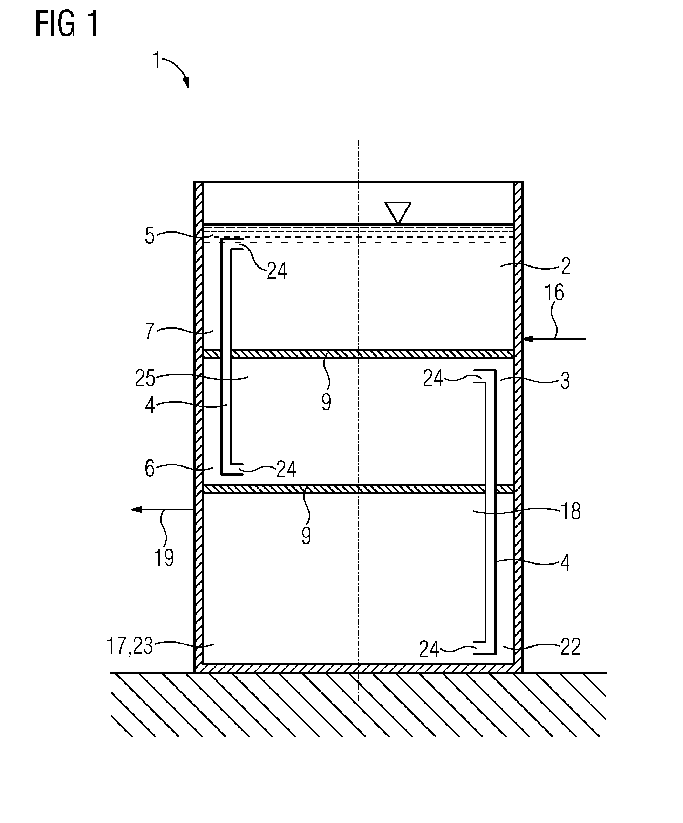

Die Figur 1 zeigt schematisch und beispielhaft einen Wärmespeicher 1 nach der Erfindung. Ein solcher Wärmespeicher 1 weist mindestens eine erste 2 und eine zweite Kammer 3 auf, wobei die Kammern 2, 3 meist größtenteils abgeschlossene Hohlräume sind aber, falls es sich um eine oberste Kammer handelt, auch noch oben offen sein können, da der Wärmespeicher ein Warmwasserspeicher ist und Wasser auch in nach oben offenen Behältern gut speicherbar ist. Die erste Kammer 2 ist über der zweiten Kammer 3 angeordnet und eine im Wesentlichen in den Kammern 2, 3 angeordnete Leitung 4 verbindet einen oberen Bereich 5 der ersten Kammer 2 mit einem unteren Bereich 6 der zweiten Kammer 3. Typischerweise umfasst ein Wärmespeicher 1 nach der Erfindung mehr als nur zwei Kammern 2, 3. Das Ausführungsbeispiel der Figur 1 weist z. B. noch eine dritte 23, unterste Kammer 17 auf. Die Höhe eines solchen Wärmespeichers 1 liegt in der Größenordnung von mehreren zehn Metern, beispielsweise 40m.

Die Leitungen 4 sind im Wesentlichen vertikal im Wärmespeicher 1 angeordnet und weisen für einen gleichmäßigen Fluss des Fluids, typischerweise konditioniertes Deionat, im Wärmespeicher 1 horizontale Enden 24 auf. Andere Leitungsabschlüsse sind aber auch denkbar. Die Figur 1 zeigt zwar nur eine Leitung 4 zwischen zwei Kammern 2, 3 und 3, 23. Dies soll jedoch nicht einschränkend sein. Es ist ebenfalls möglich, mehr als nur eine Leitung 4 für die Verbindung zweier Kammern 2, 3 und 3, 23 vorzusehen.

Die Temperaturverteilung im Wärmespeicher 1 der Figur 1 könnte in beladenem Zustand folgendermaßen aussehen: Die dritte 23 und zugleich unterste Kammer 17 weist in einem oberen Bereich 18 eine Temperatur von etwa 120°C auf. Die Temperatur im unteren Bereich 22 der untersten Kammer 17 beträgt noch etwa 100°C, wie auch der obere Bereich 25 der zweiten Kammer 3. Die Temperatur des unteren Bereichs 6 der zweiten Kammer 3 wie auch des oberen Bereichs 5 der ersten Kammer 2 liegt bei etwa 80°C.

Damit die Wärmeübertragung vom heißen auf das kalte Medium möglichst gering ist, sind die Leitungen 4 thermisch isoliert.

Aus demselben Grund sind je zwei benachbarte Kammern 2, 3 und 3, 23 durch einen isolierten Zwischenboden 9 voneinander getrennt.

Im Ausführungsbeispiel weist die erste Kammer 2 einen im unteren Bereich 7 angeordneten Anschluss 16 zum Fernwärmerücklauf und die dritte 23, unterste Kammer 17 einen im oberen Bereich 18 angeordneten Anschluss 19 zum Fernwärmevorlauf auf. Über diese Anschlüsse kann auch der Wärmespeicher 1 beund entladen werden.

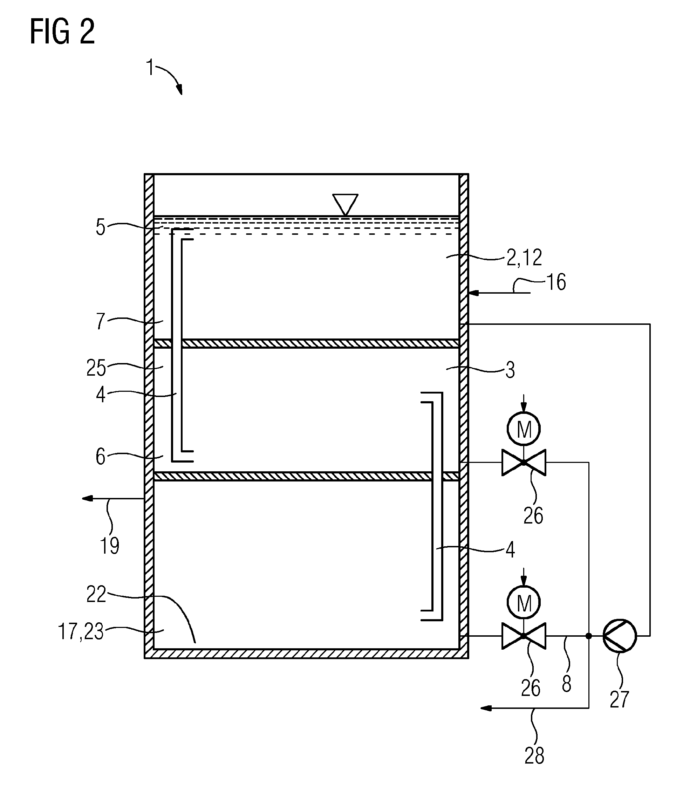

Figur 2 zeigt einen Wärmespeicher 1 nach der Erfindung mit Überladesicherung. Diese sieht vor, dass ein unterer Bereich 7 der obersten 12, ersten Kammer 2 über eine mit Ventilen 26 absperrbare Leitung 8, in die eine Pumpe 27 geschaltet ist, mit den unteren Bereichen 6, 22 der darunterliegenden zweiten und dritten Kammern 3, 23 verbunden ist. Wenn die dritte 23 also unterste Kammer 17 komplett gefüllt ist, würde das z.B. 135°C warme Wasser bei weiterer Beladung über die Ausgleichsleitung 4 in den oberen Bereich 25 der zweiten Kammer 3 strömen und aufgrund des geringeren statischen Druckes dort Dampfblasen bilden, was aber verhindert werden soll. Daher wird bei Erreichen der zulässigen maximalen Temperatur im unteren Bereich 6, 22 der zweiten 3 und dritten Kammern 23 aus dem unteren Bereich 7 der obersten 12, ersten Kammer 2 relativ kaltes Rücklaufwasser gepumpt und zugemischt, und damit die jeweilige maximal zulässige Kammertemperatur geregelt. Sobald auch die oberste Kammer 12 (im unteren Bereich 7, wo der Rücklauf einbindet) die maximal zulässige Temperatur erreicht hat, ist eine weitere Beladung nicht mehr möglich. Neben der Überladesicherung kann mittels der Pumpe 27 auch die Fernwärme-Druckhaltung 28 erfolgen.

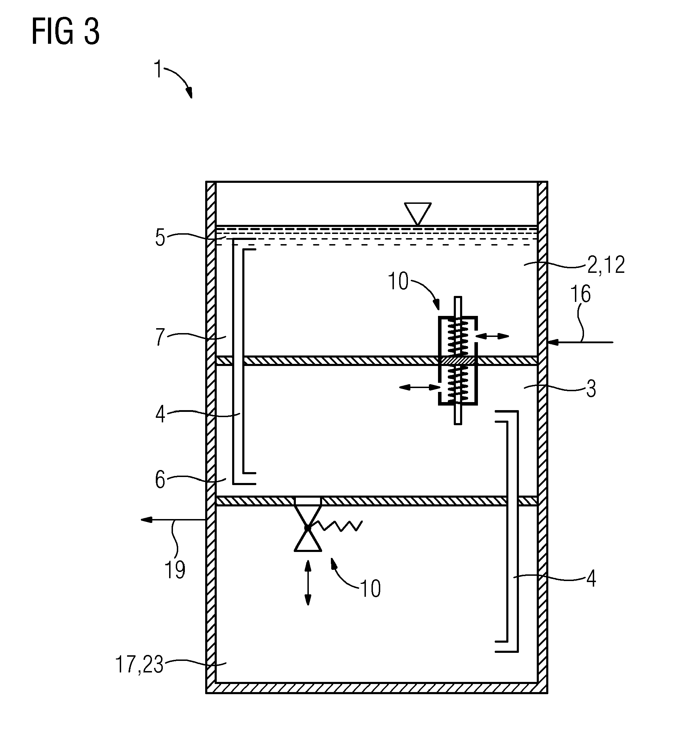

Figur 3 zeigt einen Wärmespeicher 1 nach der Erfindung mit Überdruckabsicherung wobei zwischen je zwei benachbarten Kammern 2, 3 und 3, 23 mindestens ein Druckausgleichsventil 10 angeordnet ist, das bei entsprechender Druckdifferenz öffnet. Damit kann beim Befüllen des Wärmespeichers 1 von unten über die unterste Kammer 17 die Luft in die jeweils darüber liegende Kammer 3, bzw. 2 entweichen. Beim Befüllen des Wärmespeichers 1 von oben über die oberste Kammer 12 wird das Wasser durch diese Druckausgleichsventile 10 in die jeweils untere Kammer 3, 23 strömen.

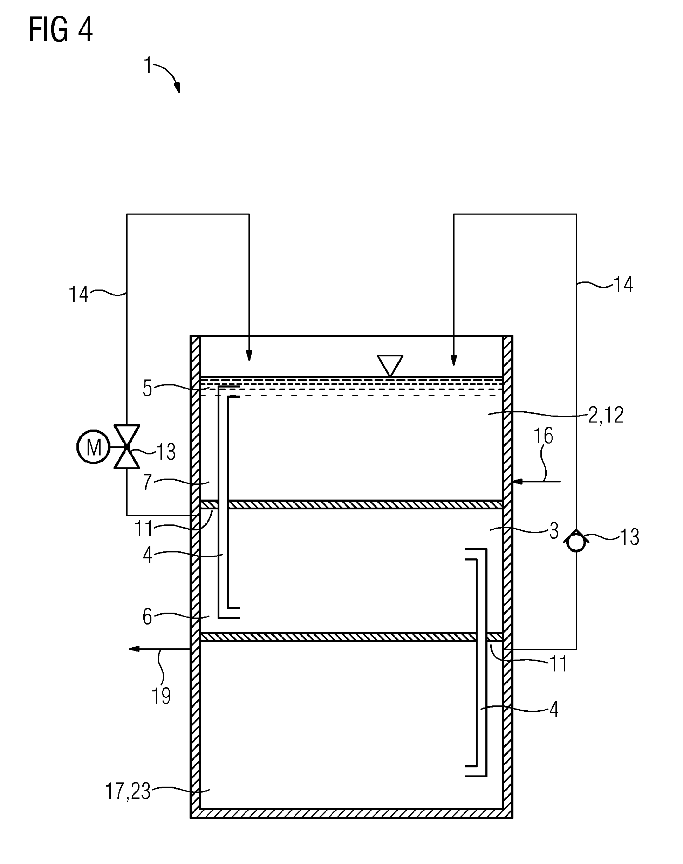

Figur 4 zeigt einen Wärmespeicher 1 nach der Erfindung mit Kammerentlüftung. An den Hochpunkten 11 der zweiten 3 und dritten Kammern 23 sind Entlüftungsventile 13 vorgesehen, welche über Leitungen 14 mit der obersten 12, ersten Kammer 2 verbunden sind. Diese Entlüftungsventile 13 können z.B. als Schwimmerventil arbeiten. Es kommen auch andere Ventile, z.B. Motorventile in Frage, welche über Füllstandsmessungen in den entsprechenden Kammern angesteuert werden. Diese Entlüftungsventile 13 entfernen eventuell anfallende Luft (z.B. auch bei der Erstbefüllung) und auch anfallenden Dampf (z.B. bei Beladung einer Kammer mit zu hoher Temperatur).

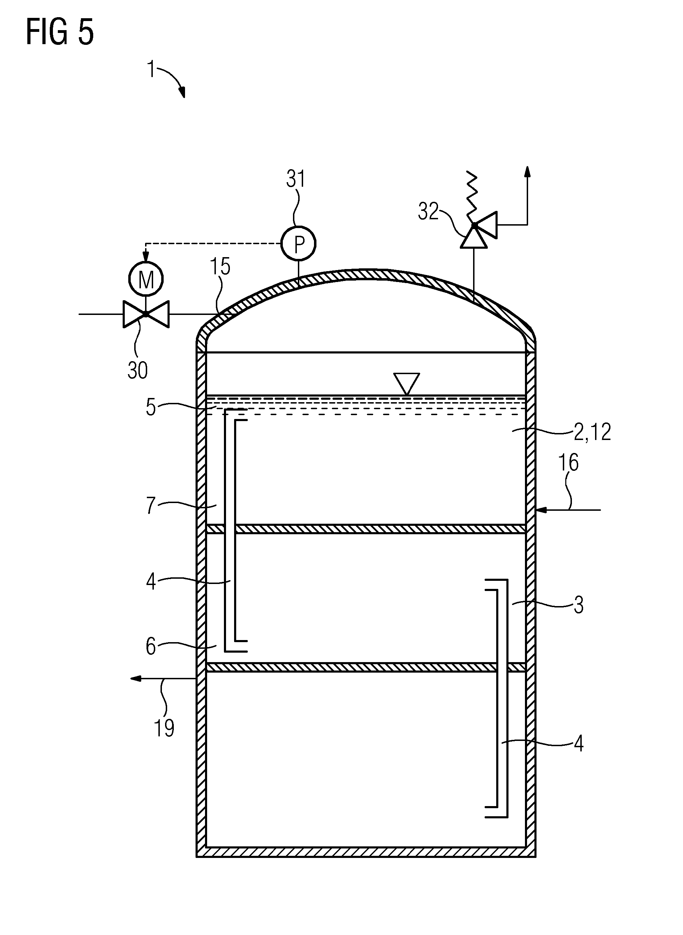

Figur 5 zeigt einen Wärmespeicher 1 nach der Erfindung wobei die oberste Kammer 12 als oben geschlossener Tank ausgeführt ist und eine Dampf- oder Inertgas-Zufuhr 15 vorgesehen ist, so dass diese Kammer 12 mit Inertgas (z.B. Stickstoff N₂) oder Polsterdampf bei einem Betriebsdruck <0,5bar beaufschlagt werden kann, um eine unerwünschte Anreicherung des Wasserinhalts mit Luftsauerstoff (O₂)oder Kohlendioxid (CO₂) zu verhindern. Die Zufuhr von Inertgas oder Dampf wird im Beispiel der Figur 5 durch ein motorgesteuertes Ventil 30 geregelt, das mit einem Druckmesser 31 gekoppelt ist. Weiterhin kann ein Überdruckventil 32 vorgesehen sein, um den maximalen Betriebsdruck auf unter 0,5 barg zu begrenzen.

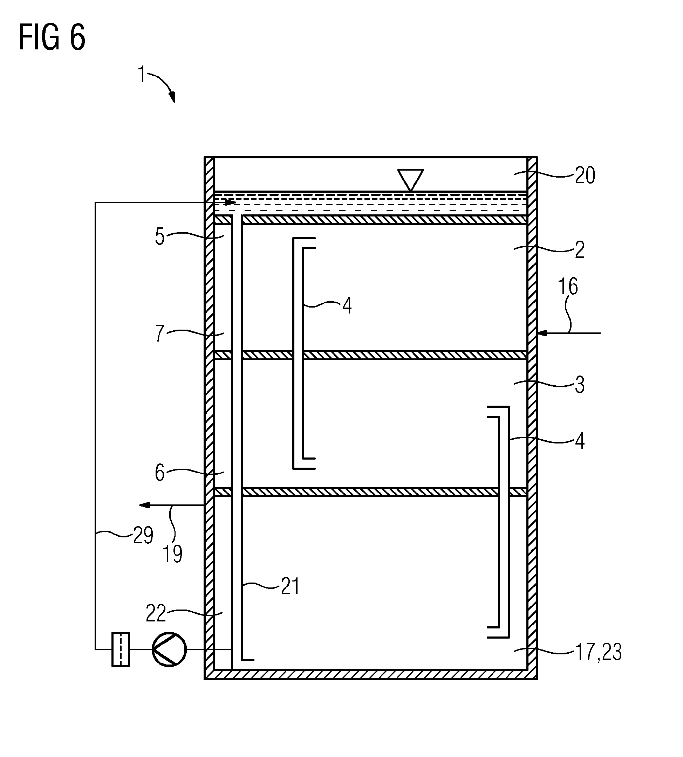

Figur 6 schließlich zeigt einen Wärmespeicher 1 nach der Erfindung mit Zusatzkammer 20 und Kaltwasserzirkulation 29 zur Erhöhung des statischen Drucks in den unten liegenden Kammern 2, 3, 23. Im Beispiel der Figur 6 ist über der ersten Kammer 2 mit dem Anschluss 16 zum Fernwärmerücklauf eine Zusatzkammer 20 angeordnet, in der eine vergleichsweise geringe Kaltwasservorlage gehalten wird. Die Zusatzkammer 20 ist über eine in den Kammern 2, 3, 23 angeordnete Leitung 21, in der sich eine Kaltwassersäule ausbildet, mit der untersten Kammer 17 verbunden. Die Leitung 21 mündet in einen unteren Bereich 22 der untersten Kammer 17.

Damit dauerhaft sichergestellt ist, dass sich in der Leitung 21 eine Kaltwassersäule ausbildet, ist eine Kaltwasserzirkulation 29 vorgesehen.

Somit kann der Druck in der ersten Kammer 2 mit dem Anschluss 16 zum Fernwärmerücklauf, unter Ausnutzung der verschiedenen spezifischen Gewichte der Kaltwassersäule in der Leitung 21 und des Warmwassers in den einzelnen Kammern 2, 3, 23, weiter angehoben werden. Die erste Kammer 2 kann dann mit Fernwärme-Wasser über 100°C beladen werden, was die Gesamtladekapazität des Wärmespeichers 1 weiter erhöht.

## Patentansprüche

1. Wärmespeicher (1) zum Speichern und Bereitstellen von bei der Stromerzeugung anfallender Wärmeenergie mittels eines Fluids, mit mindestens einer ersten (2) und einer zweiten Kammer (3), wobei die erste (2) über der zweiten Kammer (3) angeordnet ist und eine im Wesentlichen in den Kammern (2, 3) angeordnete Leitung (4) einen oberen Bereich (5) der ersten Kammer (2) mit einem unteren Bereich (7) der zweiten Kammer (3) verbindet.

2. Wärmespeicher (1) nach Anspruch 1, wobei ein unterer Bereich (7) der ersten Kammer (2) über eine absperrbare Leitung (8), in der eine Pumpe (27) angeordnet ist, mit einem unteren Bereich (6) mindestens einer darunterliegenden Kammer (3) verbunden ist.

3. Wärmespeicher (1) nach einem der Ansprüche 1 oder 2, wobei die Leitung (4) thermisch isoliert ist.

4. Wärmespeicher (1) nach einem der vorhergehenden Ansprüche, wobei je zwei benachbarte Kammern (2, 3) durch einen isolierten Zwischenboden (9) voneinander getrennt sind.

5. Wärmespeicher (1) nach Anspruch 4, wobei zwischen je zwei benachbarten Kammern (2, 3) mindestens ein Druckausgleichsventil (10) angeordnet ist.

6. Wärmespeicher (1) nach einem der vorhergehenden Ansprüche, wobei an einem Hochpunkt (11) einer Kammer (3), die unter einer obersten Kammer (12) angeordnet ist, ein Entlüftungsventil (13) vorgesehen ist, welches über eine Leitung (14) mit der obersten Kammer (12) verbunden ist.

7. Wärmespeicher (1) nach einem der vorhergehenden Ansprüche, wobei die oberste Kammer (12) als oben geschlossener Tank ausgeführt ist und eine Dampf- oder Inertgas-Zufuhr (15) vorgesehen ist.

8. Wärmespeicher (1) nach einem der vorhergehenden Ansprüche, wobei die erste Kammer (2) einen in einem unteren Bereich (7) angeordneten Anschluss (16) an einen Fernwärmerücklauf und eine unterste Kammer (17) einen in einem oberen Bereich (18) angeordneten Anschluss (19) an einen Fernwärmevorlauf aufweisen.

9. Wärmespeicher (1) nach einem der vorhergehenden Ansprüche, wobei über der ersten Kammer (2) eine Zusatzkammer (20) angeordnet ist, welche über eine Leitung (21) mit der untersten Kammer (17) verbunden ist, wobei die Leitung (21) in einen unteren Bereich (22) der untersten Kammer (17) mündet.

10. Wärmespeicher (1) nach einem der vorhergehenden Ansprüche, wobei das Fluid für die Verwendung in einem Fernheiznetz geeignet ist.

11. Wärmespeicher (1) nach Anspruch 10, wobei das Fluid konditioniertes Deionat ist.

12. Anlage zur Kraft-Wärme-Kopplung, umfassend einen Stromerzeuger und einen Wärmespeicher (1) nach einem der vorhergehenden Ansprüche.

13. Anlage nach Anspruch 12, wobei eine Verbindungsleitung zwischen Wärmespeicher (1) und Fernwärmenetz vorgesehen ist.

14. Verfahren zum Speichern und Bereitstellen von bei der Stromerzeugung anfallender Wärmeenergie mittels eines Fluids, wobei ein Betriebsdruck in einem heißesten Teil eines Wärmespeichers (1) oberhalb eines Sättigungsdrucks des Fluids entsprechend einer maximal möglichen Fernwärme-Vorlauftemperatur zu liegen kommt, **dadurch gekennzeichnet, dass** das Fluid in übereinanderliegenden, miteinander verbundenen Kammern (2, 3, 12, 17) gespeichert wird, und der heißeste Teil in der untersten Kammer (17) gespeichert wird, wobei der Druck für den heißesten Teil in der untersten Kammer (17) durch darüber liegendes kälteres Fluid erzeugt wird.
